# EUROPEAN PATENT APPLICATION

(11) **EP 4 181 238 A1**
(43) Date of publication of application: **17.05.2023**
(21) Application number: 21207900.8
(22) Date of filing: 12.11.2021
(51) Int. Cl.: H01M 4/86, H01M 8/0273, H01M 8/10

(54) **MEMBRANE-ELECTRODE ASSEMBLY FOR A FUEL CELL STACK AND FUEL CELL DEVICE COMPRISING THE SAME**

(71) Applicant: AVL List GmbH, 8020 Graz (AT); AVL Fuel Cell Canada Inc., Burnaby, British Columbia V5A4N8 (CA)
(72) Inventor: Thomas, Owen, Vancouver, V5A4N8 (CA); Raibeck, Laura, Vancouver, V5A4N8 (CA); Cimenti, Max, Vancouver, V5A4N8 (CA)
(74) Representative: Gamper, Bettina

(57) **Abstract**

The present invention relates to a membrane-electrode assembly (20) and a corresponding electrochemical fuel cell device having stacked cells. The membrane-electrode assembly (20) comprises, amongst others, a first gas diffusion layer (21) arranged on one side of a membrane (23) and a second gas diffusion layer (22) arranged on the opposite side of the membrane (23) for distributing fluids across each side of the membrane (23). The first gas diffusion layer (21) is formed to extend across and beyond planar dimensions of the membrane (23) into at least one region adjacently arranged to the planar dimensions of the membrane (23) for covering an interfacing surface in the fuel cell stack, and the second gas diffusion layer (22) is formed to extend across the planar dimensions of the membrane (23) without extending beyond, or is formed to extend across and beyond the planar dimensions of the membrane (23) into another one of the at least one region adjacently arranged to the planar dimensions of the membrane (23) which is a transition region of the fuel cell stack for accommodating fluid flow to and from the fuel cell for covering an interfacing surface of the fuel cell stack.

## Description

The present application relates to a membrane-electrode assembly having a difference in a first and a second gas diffusion layer, and a fuel cell device having a stack arrangement configured with said membrane-electrode assembly of different gas diffusion layers.

### Technical field of the invention

The membrane-electrode assembly according to the invention is suitable to be integrated in the stack design of a compact fuel cell system, in particular a compact fuel cell for transportation applications having a proton exchange membrane (PEM-FC), or any other type of electrochemical device comprising a stack of cells each including a membrane-electrode assembly to be alternatingly stacked between bipolar plates and accommodating channels or other kinds of pathways for conducting fluids for electrochemical reaction in the cells.

### Background of the invention

For an economical manufacturing and assembling, the design of a fuel cell stack strives for stackable parts identically formed as possible for a repeatedly stacking of so-called unit cells building up the fuel cell stack. Also in terms of an economical manufacturing and assembling, the design strives for a small number of components. Further, in purpose of a compact design each component needs to integrate more than one of all required functionalities.

Several compact fuel cell stack designs integrate channels or ports and manifolds for supply of hydrogen and air as well as discharge of exhaust gas and water or wet gas fluid within the stack. It is known to provide so-called transition regions to e.g. two opposite sides of an active region of the cells. Such transition regions provide a fluid communicating interface to the cells, i.e. the membrane-electrode assemblies. The sections of the cell to be addressed for fluid supply or discharge exhibit a flat flow cross-section, and a port design within such transition regions aims to achieve a preferrable uniform mass flow distribution within the flat flow cross-section of the interface for an as possible even fluid distribution into each of channels across a gas diffusion layer (GDL) of the cell (not illustrated).

The common stack design is constituted by the membrane-electrode assemblies of each cell to be stacked between bipolar plates providing electrical conductivity between the cells, wherein the bipolar plates have a longer dimension than the active part of the membrane-electrode assemblies (MEA) so as to enclose and protect the latter. In a common compact stack design, such transition regions are provided within outer sections of the bipolar plates extending beyond a dimension of the membrane-electrode assemblies. In this compact stack design, the supply and discharge of fluid in communication with the cells is accommodated in the form of internal channels or pathways of different flow designs integrated in the bipolar plates by pathway cavities divided by channeling plate features, wherein such channels are built by open half cross-sections recessed in surfaces of adjacently stacked bipolar plates or any stacking elements.

In a common prior art design, a frame member supporting the membrane-electrode assembly and arranged to mount the latter between the bipolar plates was covered by a pair of the gas diffusion layers of the respective membrane-electrode assembly on both sides for cushioning said frame member against plate features. However, in this case, a problem became apparent that the flow of fluid in the pathway cavities of the bipolar plates was obstructed or at least reduced by the soft open porous material of the gas diffusion layers. The soft material is compressed between the frame member and the plate features so as to deflect or pillow while constituting a restraining intrusion in the open half cross-sections of the pathway cavities between the plate features.

### Summary of the Invention

It is an object of the invention to improve the flow efficiency of the transition regions while not adding additional durability risks associated with impingement damage or leakage or severe flow restriction at interfacing surfaces between stacking elements of a fuel cell stack having integrated internal fluid pathways. It is a further object of the invention to provide a design for a fuel cell stack without raising complexity or manufacturing costs whilst enabling an enhanced durability and operation safety.

The object is solved by a membrane-electrode assembly having the features of claim 1 and a corresponding electrochemical fuel cell device having the features of claim 8. Further features and details of the invention result from the dependent claims, the specification, and the drawings. Features and details described in connection with the claimed membrane-electrode assembly according to the invention naturally also apply in connection with the claimed fuel cell device according to the invention, and vice versa, so that the individual aspects of the invention are or can always be mutually referred to in the disclosure.

The invention proposes a membrane-electrode assembly for an electrochemical fuel cell stack having stacked cells, wherein the membrane-electrode assembly being provided for each cell and comprises: an ion-conducting membrane for conducting ions between two sides of the membrane, catalyst layers or a catalyst coating for electrochemical conversion reactions across each side of the membrane, and a first gas diffusion layer arranged on one side of the membrane and a second gas diffusion layer arranged on the opposite side of the membrane for distributing fluids across each side of the membrane. The first gas diffusion layer is formed to extend across and beyond planar dimensions of the membrane into at least one region adjacently arranged to the planar dimensions of the membrane for covering an interfacing surface in the fuel cell stack. The second gas diffusion layer is formed to extend across the planar dimensions of the membrane without extending beyond, or is formed to extend across and beyond the planar dimensions of the membrane into another one of the at least one region adjacently arranged to the planar dimensions of the membrane for covering an interfacing surface of the fuel cell stack.

Moreover, the invention analogously proposes an electrochemical fuel cell device having an electrochemical fuel cell device having a stack arrangement of stacked cells, comprising bipolar plates stacked between each of the cells for providing electrical conduction between the cells. A cross-section of the stack arrangement is divided into an active region for accommodating an electrochemical reaction of the cells, and at least one transition region arranged adjacent to the active region for accommodating pathways for supplying and returning fluids reacting in the cells. Each cell includes a membrane-electrode assembly comprising: an ion-conducting membrane for conducting of ions between two sides of the membrane, catalyst layers or a catalyst coating for electrochemical conversion reactions across each side of the membrane, and a first gas diffusion layer arranged on one side of the membrane and a second gas diffusion layer arranged on the opposite side of the membrane for distributing fluids across each side of the membrane. With respect to the cross-section of the stack arrangement of the fuel cell device, the first gas diffusion layer is formed to extend across the active region and across or into the at least one transition region for covering an interfacing surface of a bipolar plate. The second gas diffusion layer is formed to extend across the active region without extending beyond the active region, or is formed to extend across the active region and across or into another one of the at least one transition region for covering an interfacing surface of a bipolar plate.

Hence, for the first time, the invention provides a fuel cell stack design and a single assembly component design, where gas diffusion layers on each side of the membrane differ from each other in their dimensions or extension outside active elements of the cell, and where an extended section of a single gas diffusion layer serves for cushioning a contact in interfacing areas between stacked elements.

As a first advantage, impingement damages or leakages due to contact of sharp edges of the bipolar plates in surface contacts of stacking that should constitute sealing interfaces within the above-described transition regions of the stack arrangement can be avoided by means of the comparably softer material of the gas diffusion layer arranged in between. This holds true also for an arrangement where the frame member still gets in direct contact on one side with one of two facing bipolar plates, since the achieved dampening is sufficient for effectively suppressing peaks of detrimental impingement for both sides of the frame member.

As a second advantage, due to the use of a single gas diffusion layer arranged on one side of the cell, a respective fluid flow might be affected merely on one side of the frame member supporting the membrane-electrode assembly, or more particular, open cross-sections of fluid pathways in only one of two bipolar plates might be diminished by material of a gas diffusion layer within the transition region of the stack arrangement. On the other side of the cell, the full flow cross-section of pathways recessed in the respective bipolar plate remains available to an entire depth of profile. The design according to the invention thus provides a reasonable relation between the avoidance of impingement damages or leakage while maintaining decent flow capacities by leaving more pathways unaffected, more particular, leaving on at least one side of the plate all flow cross-sections without any intrusions of compressed material of a gas diffusion layer. Such ratio is achieved while keeping thickness dimensions of the cell or the bipolar plates unamended, i.e. improving compactness.

Furthermore, a third advantage is to be seen in the integration of these beneficial properties without the need of manufacturing any further element or substantial modification of a present component. As a result, the beneficial effects according to the invention can be achieved by solely amending a positioning or cutting of two gas diffusion layers with respect to the cell, i.e. the planar dimensions of the membrane or the active region in terms of the fuel cell stack. Hence, the invention might be realized without any substantial expenses on efforts or costs but an implementation of amended sizes or positions of the gas diffusion layers in an existing manufacturing or design of a sandwich structure of a PEM fuel cell.

According to a preferred embodiment, the first gas diffusion layer and the second gas diffusion layer of the membrane-electrode assembly have different planar dimensions.

According to a preferred alternative embodiment, the first gas diffusion layer and the second gas diffusion layer of the membrane-electrode assembly have basically the same planar dimensions, wherein the first gas diffusion layer and the second gas diffusion layer of the membrane-electrode assembly are arranged in shifted positions with respect to the planar dimensions of the membrane. In this way, the same gas diffusion layers having the same cutting dimensions can still be used by only altering a position of same during the assembly.

According to an advantageous aspect of the invention, wherein a respective gas diffusion layer section formed to extend beyond the planar dimensions for covering an interfacing surface of the fuel cell stack, includes impregnation or inclusion of a further material, including an elastic material for sealing and/or compensating of tolerances.

According to an alternative advantageous aspect of the invention, a respective gas diffusion layer section formed to extend beyond the planar dimensions of the membrane for covering an interfacing surface of the fuel cell stack, is built by another material than a respective gas diffusion layer section extending within planar dimensions of the membrane only, for distributing fluids.

In an elaborated embodiment, a respective gas diffusion layer section formed to extend beyond the planar dimensions of the membrane for covering an interfacing surface of the fuel cell stack has another thickness of the same material, particularly is thinner than a respective gas diffusion layer section extending within planar dimensions of the membrane only, for distributing fluids.

In an elaborated alternative embodiment, the first gas diffusion layer has another material and/or thickness than the second gas diffusion layer.

According to an aspect of the invention relating to the fuel cell device with a stack arrangement divided into an active region and at least one transition region, as well as including ports and pathways for supplying and returning fluids; the fuel cell device preferably also comprises a frame member. Such frame member is overlapping with the membrane-electrode assembly in a peripheral section for supporting the membrane-electrode assembly, and extending outside the peripheral section for fixing the frame member between interfacing surfaces of two bipolar plates; wherein a respective gas diffusion layer section in a respective transition region covers interfacing surfaces between the frame member and one of the two bipolar plates.

According to a preferred embodiment, the stack arrangement of the fuel cell comprises at least two transition regions diametrically arranged on opposite sides with respect to the active region; and the first gas diffusion layer extends across the at least two transition regions, and the second gas diffusion layer has smaller planar dimensions and extends into none of the at least two transition regions.

According to a preferred alternative embodiment, again, the stack arrangement comprises at least two transition regions diametrically arranged on opposite sides with respect to the active region; and, however, the first gas diffusion layer extends across one of the at least two transition regions, and the second gas diffusion layer is shifted in position so as to extend across another of the at least two transition regions.

Further objectives, advantages, features and applications of the present invention arise from the following description of the exemplary embodiments with reference to the drawings. In the drawing:
- Fig. 1A: shows a schematic view on an upper side of a membrane-electrode assembly supported in a frame member according to a first embodiment of the present invention;
- Fig. 1B: shows a schematic view on a lower side of the membrane-electrode assembly according to the embodiment of first the present invention;
- Fig. 2A: shows a schematic view on an upper side of the membrane-electrode assembly supported the frame member according to a second embodiment of the present invention;
- Fig. 2B: shows a schematic view on a lower side of the membrane-electrode assembly according to the second embodiment of the present invention;
- Fig. 3: shows a cross-section of a stacked cell in a stack arrangement of a fuel cell device according to an embodiment of the present invention; and
- Fig. 4: shows corresponding cross-sections of a stacked cell in prior art designs of a fuel cell stack arrangement.

### Detailed description of the Invention

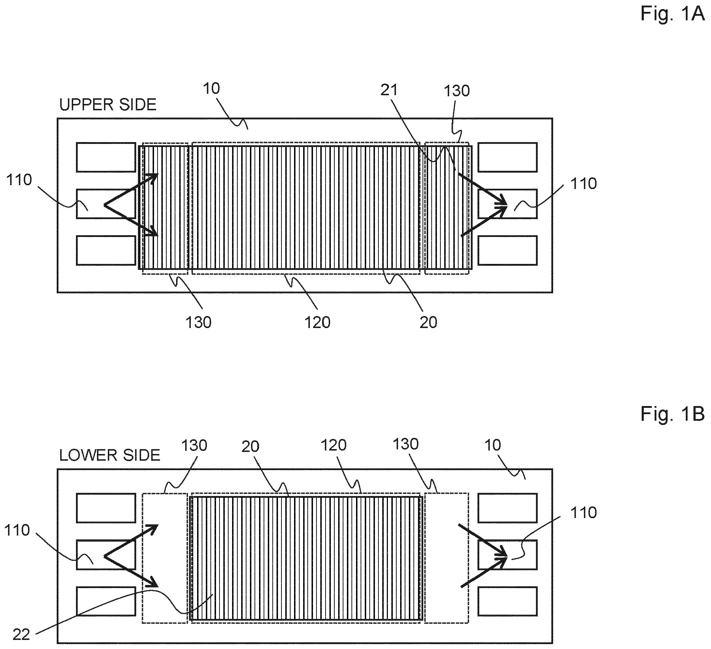

Figures 1A and 1B show an upper side and a lower side of a cell comprising a membrane-electrode assembly 20 framed by a frame member 10, wherein the shape and the perspective on the frame member 10 also represent an overall cross-section of a stack arrangement which is perpendicular to a stacking direction in a fuel cell device 100. Certain regions marked by dashed lines define for the whole stack arrangement a centrally arranged active region 120 and two transition regions 130 diametrically arranged on opposite sides of the active region 120. The active region accommodates the cells, or more particularly is occupied by a membrane-electrode assembly (MEA) including all electrochemically active elements of the cells. The transition regions 130 accommodate fluid pathways having a flat shaped flow cross-section for fitting into or between the stacked elements, particularly bipolar plates 30. Furthermore the transition regions 130 constitute a fluid interface enclosing internal pathways forming a fluid communication between the cells and outer arranged ports 110 being part of an internal manifold or other structures for a supply of air and a hydrogen based fuel gas or for a discharge of exhaust gas and water. One port 110 per side of a cell may also deliver and return a coolant for cooling the cell, however such port is not in fluid communication with the cell 20 via internal pathways enclosed with in one of the transition regions 130.

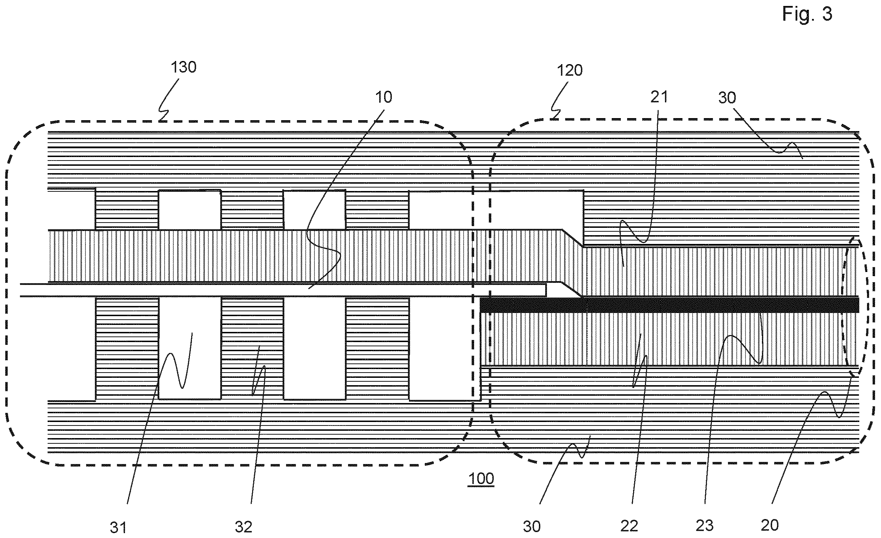

The frame member 10 illustrated in Figs. 1A and Fig. 1B, comprise basically the same outer contours shared with bipolar plates 30 and is mostly formed flat with planar interface surfaces to be stacked properly when facing each other with two facing bipolar plates, as to be seen in Fig. 3. The frame member 10 serves for mechanical supporting and mounting the electrochemically active membrane-electrode assembly 20 in the stack arrangement.

Within the transition regions 130 of the stack arrangement marked by dashed lines on the bipolar plate in Fig. 3, the bipolar plates 30 provide dedicated plate features 32 and fluid pathways 31 recessed therebetween in a surface of the bipolar plates 30. The plate features 32 and fluid pathways 31 have distinctive shapes for promoting, in a flat flow cross-section, a flow distribution of a fluid to be supplied or discharged throughout a transverse dimension of the membrane-electrode assembly 20 while achieving a preferable even pressure distribution across said flat flow cross-section. Such distinctive shapes for promoting a diffusion of fluid pressure might represent an array of round pillars form arranged in equal distances. However, alternative embodiments might provide another suitable design of plate features 32 for effecting the desired flow dynamics including, for example, plate features 32 in the form of channel walls for a splitting-up channel arrangement or the like.

Fig. 3 shows a focussed part of a cross-section of one stacked cell in the stack arrangement of the fuel cell device 100. This cross-section is parallel to a stacking direction of the stack arrangement and reveals the sandwich structure of the membrane-electrode assembly 20. The membrane-electrode assembly 20 includes an ion-conductive membrane 23 or proton-exchange membrane (PEM) having a catalytic surface coating on each side. The membrane 23 is embedded between a first gas diffusion layer 21, also shown from an upper side plan view in Fig. 1A, and a second gas diffusion layer 22, also shown from a lower side plan view in Fig. 1B. The two gas diffusion layers 21, 22 serve for receiving and distributing or dissipating and leading away a gas or fluid in communication between a transition region 130 and the surface areas of the membrane 23.

Figures 1A and 1B show a first embodiment of the invention. It becomes apparent in a comparison of Figures 1A and 1B that the upper arranged first gas diffusion layer 21 has a larger planar dimension than the lower arranged second gas diffusion layer 22. The first gas diffusion layer 21 covers the active area 120 or the membrane-electrode assembly 20 and reaches out across the transition region 130 to cover an interfacing between the frame member 10 and the upper bipolar plate 30. On the other side, the second gas diffusion layer 22 covers the active area 120 only. This arrangement corresponds to an axis symmetrical configuration as focussed by Fig. 3 on both sides of the stack arrangement in the fuel cell device 100.

The illustrated cross-section of Fig. 3 also shows the before mentioned surfaces and recesses in the profile of the plate features 32 and fluid pathways 31 of an embodiment of the bipolar plates 30 within the transition region 130. The frame member 10 is fixed to the stack arrangement of the fuel cell device 100 by being clamped between the two adjacently facing bipolar plates 30, also and particularly within the transition region 130 of the stack arrangement. Areas of extensive partial contact pressure and sharp edges exhibited by the plate features 32 in the profile of the bipolar plates 30 directly cushioned on the upper side of the frame member 10 by means of the first diffusion layer 21 and are at least indirectly dampened to a substantially reduced impact on the lower side of the frame member 10.

Furthermore, flow cross-sections of the fluid pathways 31 recessed in the lower bipolar plate 30 remain unobstructed to a full depth of profile and providing a maximum flow capacity with respect to the thickness dimension of the bipolar plates 30 in the respective design of stack arrangement. With the first gas diffusion layer reaching into the transition region 130 on the upper side only, a small portion of the height of the flow cross-sections of the fluid pathways 31 recessed in the upper bipolar plate 30 (a much smaller portion of height than depicted in the drawings for illustrative reasons) is subjected to intrusion of pillowing material of the gas diffusion layer. Without any elaborated modifications hereto, a slightly reduced flow capacity with respect to the plate thickness is to be expected due to material of the first gas diffusion layer intruding within a potential full depth of profile. The latter issue of a reduced flow capacity might however be already addressed at the stage of plate designing by taking such intrusion of pillowing material into account.

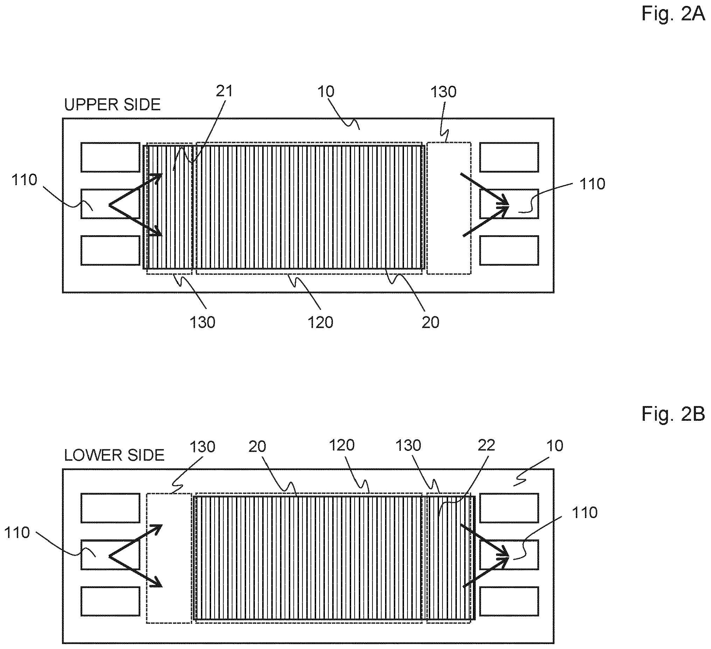

Figures 2A and 2B show a second embodiment of the invention. It becomes apparent in a comparison of Figures 2A and 2B that the upper arranged first gas diffusion layer 21 and the lower arranged second gas diffusion layer 22 have the same planar dimensions, but are positioned differently with respect to the cell. The first gas diffusion layer 21 covers the active area 120 or the membrane-electrode assembly 20 and reaches out across the transition region 130 illustrated on the left-hand side to cover an interfacing between the frame member 10 and the upper bipolar plate 30. The second gas diffusion layer 22 covers the active area 120 or the membrane-electrode assembly 20 and reaches out across the transition region 130 illustrated on the righthand side to cover an interfacing between the frame member 10 and the upper bipolar plate 30. This arrangement corresponds to point symmetrical configuration as focussed by Fig. 3 with respect to both sides of the stack arrangement in the fuel cell device 100.

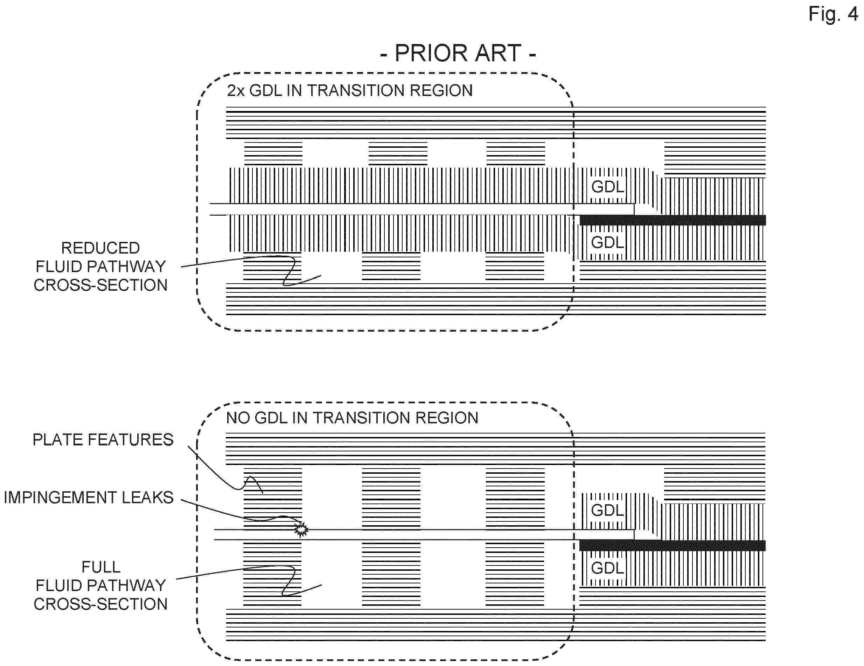

Fig. 4 shows a prior art design where the gas diffusion layers on both sides of the membrane are extended to reach into the transition region. However, in this way, flow cross-sections of all pathways in all bipolar plates are reduced by intrusion of gas diffusion layer material with respect to the potential full depth of plate feature profile on both sides of the plate (please note: realistic depth of intrusion is smaller than depicted in the drawings for illustrative reasons).

Furthermore, Fig. 4 also shows a prior art design where the profile features for diffusion of a fluid are arranged in direct contact on both sides of a MEA frame. Due to a hardness of materials commonly used for the bipolar plates and sharp edges of such profiles, this structure is prone to problems like impingement leaks and excessive wear on interface surfaces, as mentioned in the introductory part of the present disclosure.

### List of reference characters

- 10: frame member
- 20: membrane-electrode assembly (20)
- 21: first gas diffusion layer
- 22: second gas diffusion layer
- 23: membrane
- 30: bipolar plate
- 31: fluid pathway
- 32: plate feature
- 100: fuel cell device
- 110: fluid port
- 120: active region
- 130: transition region

## Claims

1. A membrane-electrode assembly (20) for an electrochemical fuel cell stack having stacked cells, wherein
the membrane-electrode assembly (20) being provided for each cell and comprises:
an ion-conducting membrane (23) for conduction ions between two sides of the membrane (23),
catalyst layers or a catalyst coating for electrochemical conversion reactions across each side of the membrane (23), and
a first gas diffusion layer (21) arranged on one side of the membrane (23) and a second gas diffusion layer (22) arranged on the opposite side of the membrane (23) for distributing fluids across each side of the membrane (23); wherein
the first gas diffusion layer (21) is formed to extend across and beyond planar dimensions of the membrane (23) into at least one region adjacently arranged to the planar dimensions of the membrane (23) for covering an interfacing surface in the fuel cell stack, and
the second gas diffusion layer (22) is formed to extend across the planar dimensions of the membrane (23) without extending beyond, or is formed to extend across and beyond the planar dimensions of the membrane (23) into another one of the at least one region adjacently arranged to the planar dimensions of the membrane (23) for covering an interfacing surface of the fuel cell stack.

2. The membrane-electrode assembly (20) according to claim 1, wherein the first gas diffusion layer (21) and the second gas diffusion layer (22) of the membrane-electrode assembly (20) have different planar dimensions.

3. The membrane-electrode assembly (20) according to claim 1, wherein the first gas diffusion layer (21) and the second gas diffusion layer (22) of the membrane-electrode assembly (20) have basically the same planar dimensions, wherein
the first gas diffusion layer (21) and the second gas diffusion layer (22) of the membrane-electrode assembly (20) are arranged in shifted positions with respect to the planar dimensions of the membrane (23).

4. The membrane-electrode assembly (20) according to any of claims 1 to 3, wherein a respective gas diffusion layer section formed to extend beyond the planar dimensions of the membrane (23) for covering an interfacing surface of the fuel cell stack, includes impregnation or inclusion of a further material, including an elastic material for sealing and/or compensating of tolerances.

5. The membrane-electrode assembly (20) according to any of claims 1 to 3, wherein a respective gas diffusion layer section formed to extend beyond the planar dimensions of the membrane (23) for covering an interfacing surface of the fuel cell stack, is built by another material than a respective gas diffusion layer section extending within planar dimensions of the membrane (23) only, for distributing fluids.

6. The membrane-electrode assembly (20) according to any of claims 1 to 5, wherein a respective gas diffusion layer section formed to extend beyond the planar dimensions of the membrane (23) for covering an interfacing surface of the fuel cell stack has another thickness of the same material, particularly is thinner than a respective gas diffusion layer section extending within planar dimensions of the membrane (23) only, for distributing fluids.

7. The membrane-electrode assembly (20) according to any of claims 1 to 4, wherein the first gas diffusion layer (21) has another material and/or thickness than the second gas diffusion layer (22).

8. An electrochemical fuel cell device (100) having a stack arrangement of stacked cells, comprising bipolar plates (30) stacked between each of the cells for providing electrical conduction between the cells, wherein
a cross-section of the stack arrangement is divided into an active region (120) for accommodating an electrochemical reaction of the cells, and at least one transition region (130) arranged adjacent to the active region (120) for accommodating pathways (31) for supplying and returning fluids reacting in the cells; and
each cell includes a membrane-electrode assembly (20) comprising:
an ion-conducting membrane (23) for conduction of ions between two sides of the membrane (23),
catalyst layers or a catalyst coating for electrochemical conversion reactions across each side of the membrane (23), and
a first gas diffusion layer (21) arranged on one side of the membrane (23) and a second gas diffusion layer (22) arranged on the opposite side of the membrane (23) for distributing fluids across each side of the membrane (23); and
with respect to the cross-section of the stack arrangement of the fuel cell device (100),
the first gas diffusion layer (21) is formed to extend across the active region (120) and across or into the at least one transition region (130) for covering an interfacing surface of a bipolar plate (30), and
the second gas diffusion layer (22) is formed to extend across the active region (120) without extending beyond the active region (120), or formed to extend across the active region (120) and across or into another one of the at least one transition region (130) for covering an interfacing surface of a bipolar plate (30).

9. The electrochemical fuel cell device (100) according to claim 8, further comprising:
a frame member (10) overlapping with the membrane-electrode assembly (20) in a peripheral section for supporting the membrane-electrode assembly (20), and extending outside the peripheral section for fixing the frame device between interfacing surfaces of two bipolar plates (30); wherein
a respective gas diffusion layer section in a respective transition region (130) covers interfacing surfaces between the frame member (10) and one of the two bipolar plates (30).

10. The electrochemical fuel cell device (100) according to any of claims 6 to 8,
wherein the stack arrangement comprises at least two transition regions (130) diametrically arranged on opposite sides with respect to the active region (120); and
the first gas diffusion layer (21) extends across the at least two transition regions (130), and the second gas diffusion layer (22) has smaller planar dimensions and extends into none of the at least two transition regions (130).

11. The electrochemical fuel cell device (100) according to any of claims 6 to 8,
wherein the stack arrangement comprises at least two transition regions (130) diametrically arranged on opposite sides with respect to the active region (120); and
the first gas diffusion layer (21) extends across one of the at least two transition regions (130), and the second gas diffusion layer (22) is shifted in position so as to extend across another of the at least two transition regions (130).

12. The electrochemical fuel cell device (100) according to any of claims 6 to 11, wherein a respective gas diffusion layer section formed to extend across or into a respective transition region (130) has a modified structure, including impregnation or inclusion of a further material, including an elastic material for sealing and/or compensating of tolerances.

13. The electrochemical fuel cell device (100) according to any of claims 6 to 11, wherein a respective gas diffusion layer section formed to extend across or into a respective transition region (130) is built by another material than a respective gas diffusion layer section extending within the active region (120) only, for distributing fluids.

14. The electrochemical fuel cell device (100) according to any of claims 6 to 13, wherein a respective gas diffusion layer section formed to extend across or into a respective transition region (130) has another thickness of the same material, particularly is thinner than a respective gas diffusion layer section extending within the active region (120) only, for distributing fluids.

15. The electrochemical fuel cell device (100) according to any of claims 6 to 12, wherein the first gas diffusion layer (21) has another material and/or thickness than the second gas diffusion layer (22).
